# EUROPÄISCHE PATENTANMELDUNG

(11) **EP 4 557 464 A1**
(43) Veröffentlichungstag der Anmeldung: **21.05.2025**
(21) Anmeldenummer: 23210380.4
(22) Anmeldetag: 16.11.2023
(51) Int. Cl.: H01M 50/105, H01M 50/119, H01M 50/124, H01M 10/04, H01M 50/186, H01M 50/342

(54) **VERFAHREN ZUM VERKÜRZEN VON DICHTUNGSABSCHNITTEN**

(71) Anmelder: Cellforce Group GmbH, 72138 Kirchentellinsfurt (DE)
(72) Erfinder: Gräf, Jürgen, 72072 Tübingen (DE); Bubeck, Luis, 72072 Tübingen (DE)
(74) Vertreter: Müller Schupfner & Partner Patent- und Rechtsanwaltspartnerschaft mbB (Muc)

(57) **Zusammenfassung**

Die Erfindung betrifft ein Verfahren zum Erstellen oder Bearbeiten eines Dichtungsbereichs eines Zellgehäuses einer Batteriezelle, wobei der Dichtungsbereich aus mindestens zwei übereinander angeordneten Materiallagen gebildet ist, welche einen Aufnahmeraum des Zellgehäuses zumindest bereichsweise begrenzen, wobei der Dichtungsbereich und/oder das Zellgehäuse festgesetzt wird, und wobei mindestens ein zweiter Abschnitt des Dichtungsbereichs durch ein Biegewerkzeug plastisch verformt wird, um eine Verkürzung einer Länge des zweiten Abschnitts zu bewirken. Des Weiteren betrifft die Erfindung eine Batteriezelle.

## Beschreibung

Die Erfindung betrifft ein Verfahren zum Bearbeiten eines Dichtungsbereichs eines Zellgehäuses einer Batteriezelle, wobei der Dichtungsbereich aus mindestens zwei miteinander verbundenen Materiallagen gebildet ist, welche einen Aufnahmeraum des Zellgehäuses zumindest bereichsweise begrenzen. Des Weiteren betrifft die Erfindung eine Batteriezelle mit mindestens einem bearbeiteten Dichtungsbereich.

Neben den sogenannten Hardcase-Zellen sind auch Pouch-Zellen mit flexiblen bzw. folienartigen Zellgehäusen bekannt. Derartige Zellgehäuse können aus mehreren Materiallagen hergestellt sein, die üblicherweise eine Materiallage aus Aluminium aufweisen. Das Zellgehäuse ist taschenförmig ausgebildet und weist einen Aufnahmeraum zum Aufnehmen von Zellkomponenten auf, welcher je nach Ausgestaltung des Zellgehäuses durch beispielsweise drei oder vier Dichtungsabschnitte begrenzt und verschlossen wird

Die im Aufnahmeraum angeordneten Zellkomponenten sind bei elektrochemischen Speichern, wie beispielsweise Lithium-Ionen-Batterien, aus Elektrodenpaketen ausgebildet. Derartige Elektrodenpakete bestehen aus einander abwechselnden, Lagen bzw. Schichten von Anoden, Kathoden und Separatoren.

Die Anodenfolien und Kathodenfolien können durch Wickeln oder Stapeln geformt und in dem Innenvolumen bzw. dem Aufnahmeraum des Zellengehäuses für den endgültigen Gebrauch positioniert werden. Die jeweiligen Anodenfolien und Kathodenfolien werden im Rahmen der Batteriezellenherstellung mit den Batteriepolen verbunden, die durch Kontaktdurchführungen aus dem Aufnahmeraum hinaus geführt sind.

Die Herstellung von Zellgehäusen von Pouch-Zellen erfolgt üblicherweise mittels des sogenannten Bookfoldings, bei dem eine vorgeformte Anordnung von Materiallagen unter Ausbildung des Aufnahmeraums entlang einer Faltlinie gefaltet wird. Anschließend werden die Materiallagen seitlich des Aufnahmeraums durch Druck und Wärme zu Dichtungsabschnitten verbunden, die den Aufnahmeraum begrenzen. Dabei entstehen insbesondere am Schnittpunkt zwischen der Faltlinie und einem Dichtungsabschnitt sogenannte Bat-Ears, die durch überschüssiges Material des Dichtungsabschnitts die Maßhaltigkeit der Batteriezelle beeinträchtigen.

Derartige Bat-Ears stehen beispielsweise bodenseitig ab und können ein flächiges Aufliegen einer Bodenfläche des Zellgehäuses, beispielsweise in einem Modulrahmen oder auf einer Kühlplatte, verhindern oder zumindest erschweren.

Die vorliegende Erfindung hat daher die Aufgabe, ein Verfahren zum Bearbeiten eines Dichtungsbereichs eines Zellgehäuses zu schaffen, welches ein Ausbilden von Bat-Ears vermeiden oder ausgebildete Bat-Ears korrigieren kann. Diese Aufgabe wird durch die im Anspruch 1 angegebenen Merkmale gelöst. Weitere vorteilhafte Ausgestaltungen der Erfindung sind Bestandteil der Unteransprüche.

Gemäß einem Aspekt der Erfindung wird ein Verfahren zum Erstellen oder Bearbeiten eines Dichtungsbereichs eines Zellgehäuses einer Batteriezelle bereitgestellt. Der Dichtungsbereich weist mindestens zwei übereinander angeordnete Materiallagen auf.

Die Materiallagen können Teile von zwei Halbschalen oder Folien sein, die im Dichtungsbereich miteinander verbindbar sind. Jede dieser Materiallagen oder Folien kann aus mehreren Schichten bestehen, die beispielsweise mindestens einen Kunststoff und eine Aluminiumlegierung aufweisen können.

Der Dichtungsbereich kann beispielsweise aus randseitigen Enden der Materiallagen gebildet werden, welche einen Aufnahmeraum des Zellgehäuses zumindest bereichsweise begrenzen. Bei einer als Pouch-Zelle ausgestalteten Batteriezelle ist der Aufnahmeraum in Form einer Tasche gebildet. In einem Schritt wird der zumindest eine Dichtungsbereich an zumindest einem ersten Abschnitt durch mindestens eine Fixierung festgesetzt. Anschließend wird mindestens ein zweiter Abschnitt des Dichtungsbereichs durch ein Biegewerkzeug plastisch verformt, um eine Verkürzung einer Länge des zweiten Abschnitts zu bewirken.

Nach einem weiteren Aspekt der Erfindung wird eine Batteriezelle bereitgestellt. Die Batteriezelle weist ein Zellgehäuse mit mindestens einem Aufnahmeraum auf, in welchem Zellkomponenten angeordnet sind.

Die Batteriezelle kann als eine sogenannte Pouch-Zelle ausgestaltet sein, bei der der Aufnahmeraum als eine Aufnahmetasche ausgestaltet ist. Der Aufnahmeraum kann durch vorgebogene bzw. wannenförmig geformte Halbschalen ausgebildet werden, welche zusammengeklappt bzw. entlang einer Faltlinie gefaltet werden.

Die Zellkomponenten sind durch mindestens einen Batteriepol elektrisch angeschlossen, welcher durch mindestens eine Kontaktdurchführung aus dem Aufnahmeraum hinausgeführt ist. Die Kontaktdurchführung ist in mindestens einem Dichtungsbereich des Zellgehäuses vorgesehen.

Der mindestens eine Dichtungsbereich ist zumindest bereichsweise durch mindestens eine Verformung, insbesondere in Form eines Verformungsmusters, wie beispielsweise eines Wellenmusters oder Zickzackmusters, in seiner Länge verkürzt ausgestaltet.

Der mindestens eine erste Abschnitt und der mindestens eine zweite Abschnitt des mindestens einen Dichtungsbereichs können sich überlappen bzw. überschneiden oder voneinander beabstandet sein.

Das Zellgehäuse kann vorzugsweise mehrere Dichtungsbereiche oder einen umlaufenden Dichtungsbereich aufweisen, welcher beispielsweise I-förmig, L-förmig oder U-förmig ausgestaltet sein kann.

Die plastische Verformung der Materiallagen im zweiten Abschnitt des Dichtungsbereichs ist vorteilhafterweise quer zu einer länglichen Ausdehnung des Dichtungsbereichs gerichtet und verursacht eine Umlenkung bzw. ein lokales Verbiegen der Materiallagen, durch welche die effektive Länge des zweiten Abschnitts verringert wird. Durch diese Maßnahme kann ein Materialüberstand bzw. sogenannte Bat-Ears, insbesondere endseitig des Dichtungsbereichs, verringert oder beseitigt werden.

Das Biegewerkzeug kann als ein separates Werkzeug oder als ein kombiniertes Biege- und Fügewerkzeug ausgestaltet sein, welches neben dem plastischen Verformen der Materiallagen auch ein thermisches Verbinden der Materiallagen ermöglicht. Dabei kann das Biegewerkzeug bei einer Ausführungsform auch als ein Teilbereich oder als ein Abschnitt eines Fügewerkzeugs zum Ausbilden von mindestens einem Dichtungsbereich ausgestaltet sein.

Das Einbringen von einer plastischen Verformung der Materiallagen im zweiten Abschnitt des Dichtungsbereichs kann unter Einwirkung von Wärme und/oder Druck realisiert werden. Die plastische Verformung kann neben einer mechanischen Stanzbewegung auch durch lokale Temperatureinwirkungen mit anschließendem Verzug des Materials realisiert werden.

Bei einer Ausführungsform wird der mindestens eine zweite Abschnitt des Dichtungsbereichs parallel zu einer Flächennormalen plastisch verformt. Hierdurch kann die effektive Länge bzw. eine Ausdehnung der Materiallagen entlang des zweiten Abschnitts technisch besonders einfach verringert werden.

Durch ein Herstellen von Dichtungsbereichen oder eines Dichtungsbereichs ausgebildete Materialüberstände können im Rahmen eines nachgeschalteten Verfahrens beseitigt werden, wenn mindestens zwei miteinander verbundene Materiallagen im zumindest zweiten Abschnitt des Dichtungsbereichs durch das Biegewerkzeug plastisch verformt werden, um eine Verkürzung der Länge des zweiten Abschnitts zu bewirken.

Gemäß einer alternativen Ausgestaltung des Verfahrens werden durch das Biegewerkzeug die Materiallagen zumindest im zweiten Abschnitt des Dichtungsbereichs miteinander verbunden und plastisch verformt, um eine Verkürzung einer Länge des zweiten Abschnitts zu bewirken. Diese Maßnahme ermöglicht eine gleichzeitige Ausbildung von Dichtungsbereichen mit zumindest lokalen Korrekturen von Bat-Ears.

Nach einer weiteren Ausführungsform weist der Dichtungsbereich mindestens eine Kontaktdurchführung auf. Mindestens ein erster Abschnitt ist einseitig oder beidseitig der Kontaktdurchführung angeordnet. Vorteilhafterweise wird der Dichtungsbereich an einem der beiden ersten Abschnitte oder an beiden ersten Abschnitten durch mindestens eine Fixierung festgesetzt. Hierdurch kann das Zellgehäuse und/oder die Batteriezelle besonders zuverlässig festgesetzt werden, um eine plastische Verformung präzise in den zweiten Abschnitt des Dichtungsbereichs einbringen zu können.

Im Bereich der Kontaktdurchführung kann der Dichtungsbereich strukturell verstärkt und starr ausgeführt sein, um Batteriepole durchzuführen. Alternativ kann der Dichtungsbereich an Kontaktdurchführungen aufgrund von durchgeführten Batteriepolen besonders starr und verwindungssteif ausgestaltet sein.

Der zweite Abschnitt kann besonders effizient in seiner länglichen Ausdehnung verkürzt werden, wenn durch das Biegewerkzeug in den mindestens einen zweiten Abschnitt ein Wellenmuster eingeprägt wird, welches eine Amplitude in Richtung einer Flächennormalen des zweiten Abschnitts aufweist.

Gemäß einem weiteren Ausführungsbeispiel wird die Verkürzung des zweiten Abschnitts durch eine Wellenlänge und/oder durch die Amplitude des Wellenmusters eingestellt. Hierdurch können unterschiedliche Parameter des Wellenmusters dazu eingesetzt werden, einen Grad der Verkürzung des zweiten Abschnitts aufgrund der plastischen Verformung variabel einzustellen.

Bereits ausgebildete Bat-Ears oder ein Ausbilden von Bat-Ears entlang des Dichtungsabschnitts kann technisch einfach vermieden bzw. beseitigt werden, wenn durch das Biegewerkzeug in den mindestens einen zweiten Abschnitt ein Zickzackmuster mit mehreren geraden und/oder gebogenen Segmenten eingeprägt wird, welches in Richtung einer Flächennormalen des zweiten Abschnitts ausgelenkt ist.

Nach einer weiteren Ausführungsform wird das Zickzackmuster mit gleichlangen oder unterschiedlich langen Segmenten in den mindestens einen zweiten Abschnitt durch das Biegewerkzeug eingeprägt. Die jeweiligen Segmente des Zickzackmusters sind relativ zueinander gewinkelt und können somit unterschiedliche oder gleiche Längen aufweisen. Diese Maßnahme ermöglicht eine besonders präzise Einstellung der Verkürzung des zweiten Abschnitts des Dichtungsbereichs bzw. eine Einstellung einer finalen Länge des Dichtungsbereichs. Dabei kann ein verfügbarer Platz in Richtung der Flächennormalen des zweiten Abschnitts optimal ausgenutzt werden, wenn die Länge der Segmente an den verfügbaren Platz angepasst werden kann.

Die Verkürzung des zweiten Abschnitts des Dichtungsbereichs kann technisch einfach eingestellt werden, wenn ein relativer Winkel der Segmente des Zickzackmusters gegenüber einem Verlauf des zweiten Abschnitts vor der Verformung durch das Biegewerkzeug dazu eingesetzt wird, um die Verkürzung des zweiten Abschnitts einzustellen.

Je nach Ausgestaltung kann das eingeprägte Wellenmuster oder Zickzackmuster eine beliebige Länge aufweisen. Dabei können die jeweiligen Muster beispielsweise eine S-Form, eine doppelte S-Form, eine dreifache S-Form und dergleichen aufweisen, wobei eine S-Form quasi als eine Wellenlänge des entsprechenden Musters ausgestaltet sein kann.

Gemäß einem weiteren Ausführungsbeispiel wird das Biegewerkzeug dazu eingesetzt, mindestens einen kopfseitig und/oder bodenseitig angeordneten zweiten Abschnitt des Dichtungsbereichs zu verformen. Hierdurch können randseitig abstehende Dichtungsbereiche bzw. Bat-Ears lokal korrigiert werden, um die Maßhaltigkeit der Batteriezelle zu gewährleisten.

Die Korrektur von Bat-Ears kann flexibel in einen Herstellungsprozess von Batteriezellen implementiert werden, wenn die plastische Verformung des mindestens einen zweiten Abschnitts vor einem Verschließen des Aufnahmeraums oder nach einem Verschließen des Aufnahmeraums durchgeführt wird.

Nachstehend werden mehrere Ausführungsbeispiele der Erfindung anhand der Zeichnungen näher erläutert. Es zeigen:
Fig. 1 eine schematische Darstellung einer Batteriezelle vor einem Beseitigen von Bat-Ears gemäß einer Ausführungsform der Erfindung,
Fig. 2 Detaildarstellungen der Batteriezelle aus Fig. 1 nach einem durchgeführten Verfahren gemäß einer Ausführungsform der Erfindung,
Fig. 3 schematische Darstellungen zum Veranschaulichen einer Verkürzung eines zweiten Abschnitts eines Dichtungsbereichs aufgrund einer plastischen Verformung,
Fig. 4 eine perspektivische Darstellung zum Veranschaulichen einer Verkürzung eines zweiten Abschnitts eines Dichtungsbereichs aufgrund einer plastischen Verformung durch ein Verfahren gemäß einer weiteren Ausführungsform der Erfindung, und
Fig. 5 eine Draufsicht auf einen Dichtungsbereich zum Veranschaulichen eines Verfahrens gemäß einer weiteren Ausführungsform der Erfindung.

In den Abbildungen kennzeichnen identische Bezugsziffern dieselben Elemente bzw. konstruktiven Bestandteile. Die Größen und relativen Positionen der Elemente in den Abbildungen sind nicht unbedingt maßstabsgetreu gezeichnet, und einige dieser Elemente sind vergrößert dargestellt und der Übersicht halber angepasst positioniert. Darüber hinaus sollen die besonderen Formen der gezeichneten Elemente keine Informationen über die tatsächliche Form der einzelnen Elemente vermitteln, sondern wurden lediglich zur leichteren Erkennbarkeit in den Abbildungen ausgewählt.

In den Figuren wird ein Verfahren zum Erstellen oder Bearbeiten eines Dichtungsbereichs 20 eines Zellgehäuses 110 einer Batteriezelle 100 veranschaulicht.

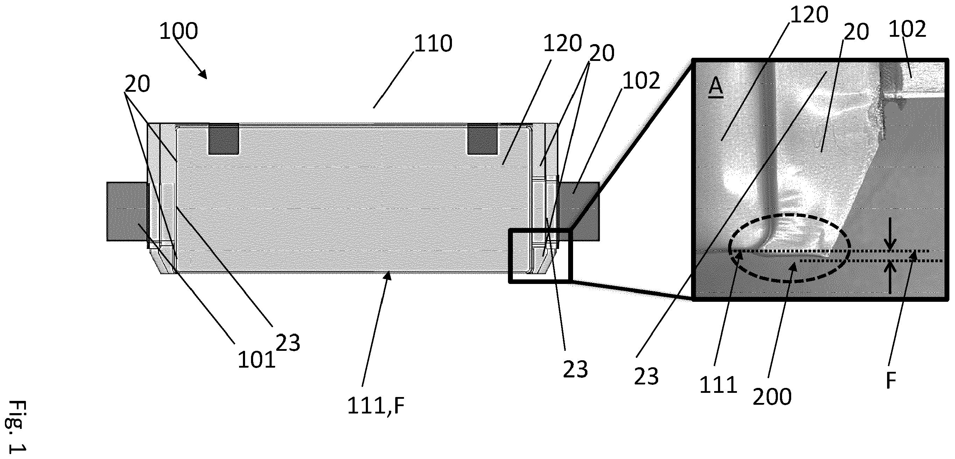

In der Fig. 1 ist eine schematische Darstellung der Batteriezelle 100 vor einem Beseitigen von sogenannten Bat-Ears 200 gemäß einer Ausführungsform der Erfindung gezeigt. Die Bat-Ears 200 sind Ausbuchtungen 200 an den Randbereichen oder Eckbereichen zwischen Faltlinien F des Zellgehäuses 110 und an diese Faltlinie F angrenzenden Dichtungsbereich 20, bei dem Materiallagen des Zellgehäuses 110 zusammengefügt sind.

Derartige Bat-Ears 200 werden insbesondere bei Batteriezellen 100 in Form von Pouch-Zellen gebildet und ragen, im dargestellten Ausführungsbeispiel, bodenseitig über eine Sollgeometrie oder Sollkante eines Bodens 111 des Zellgehäuses 110 hinaus. Hierdurch kann der Boden 111 des Zellgehäuses nicht plan auf einer Auflage oder einem Gehäuse aufliegen, wodurch thermische und/oder mechanische Beeinträchtigungen der Batteriezelle 100 resultieren können.

Die Batteriezelle 100 weist beispielhaft ein Zellgehäuse 110 mit einem Aufnahmeraum 120 auf, in welchem nicht dargestellte Zellkomponenten angeordnet sind.

Die im Aufnahmeraum 120 angeordneten Zellkomponenten bestehen beispielsweise aus einander abwechselnden, Lagen bzw. Schichten von Anoden, Kathoden und Separatoren. Die Anoden und Kathoden sind beispielsweise als Folien ausgeführt und können durch Wickeln oder Stapeln geformt und in dem Aufnahmeraum 120 des Zellengehäuses 110 positioniert sein.

Die jeweiligen Anodenfolien und Kathodenfolien werden im Rahmen der Batteriezellenherstellung mit Batteriepolen 101, 102 verbunden, die durch Kontaktdurchführungen 23 aus dem Aufnahmeraum 120 hinaus geführt sind. Die Kontaktdurchführungen 23 sind an gegenüberliegenden Seiten des Zellgehäuses 110 angeordnet und ermöglichen ein Hinausführen der Batteriepole 101, 102 durch die Dichtungsabschnitte 20 hindurch.

An den Dichtungsabschnitten 20 können die Materiallagen, die den Aufnahmeraum 120 ausbilden miteinander verklebt und/oder verschweißt sein, um den Aufnahmeraum 120 bereichsweise zu begrenzen und/oder zu definieren.

Der Aufnahmeraum 120 kann durch vorgebogene bzw. wannenförmig geformte Halbschalen (nicht gezeigt) ausgebildet werden, welche zusammengeklappt bzw. entlang der Faltlinie F gefaltet werden. Die Faltlinie F verläuft im dargestellten Ausführungsbeispiel entlang des Bodens 111 des Zellgehäuses 110 unterhalb des Aufnahmeraums 120.

Bedingt durch das Verbinden der Materiallagen entlang des Dichtungsbereichs 20 werden bodenseitig Ausbuchtungen bzw. Bat-Ears 200 gebildet, die über eine Sollgeometrie des Bodens 111 hinausragen. In der Detailansicht A wird diese Abweichung durch die Pfeile illustriert. Um diese Ausbuchtung bzw. die Bat-Ears 200 zu korrigieren, wird das erfindungsgemäße Verfahren angewandt, bei dem beispielsweise ein Wellenmuster oder Zickzackmuster in den Dichtungsbereich 20 eingebracht wird, um eine Verkürzung der Ausbuchtung 200 zu bewirken.

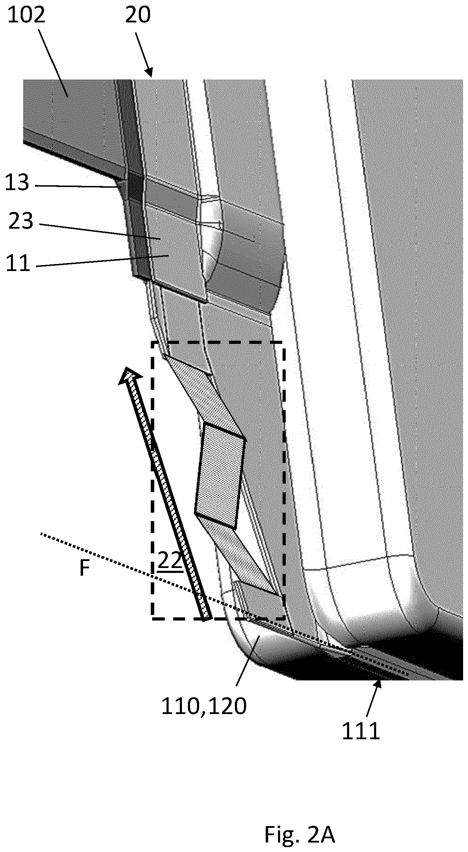

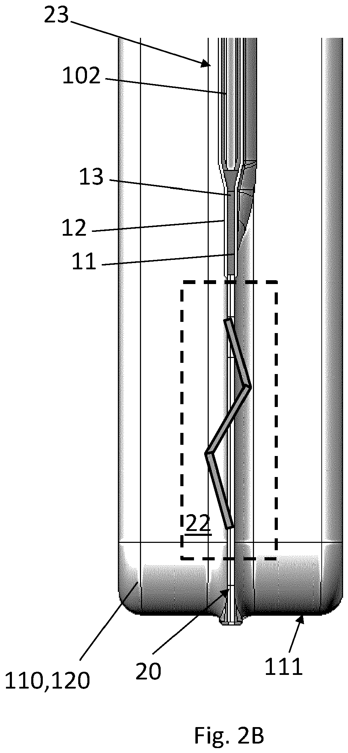

Die Fig. 2 zeigt Detaildarstellungen der Batteriezelle 100 aus Fig. 1 nachdem ein Verfahren gemäß einer Ausführungsform der Erfindung durchgeführt wurde, bei dem eine plastische Verformung des Dichtungsbereichs 20 durch ein nicht gezeigtes Biegewerkzeug erfolgte, um die ausgebildeten Bat-Ears 200 zu korrigieren. Dabei zeigt die Fig. 2A eine perspektivische Darstellung der Detailansicht A aus Fig. 1 und die Fig. 2B eine Seitenansicht auf den plastisch Verformten zweiten Abschnitt 22 des Dichtungsbereichs 20 der Detailansicht A aus Fig. 1.

Des Weiteren wird in der Fig. 2A die Richtung der Verkürzung bzw. der Korrektur der Ausbuchtung 200 durch den Pfeil visualisiert. Das eingeprägte Verformungsmuster zieht im dargestellten Ausführungsbeispiel die Ausbuchtung nach oben bzw. in Richtung der Kontaktdurchführung 23.

Die Figuren veranschaulichen auch, dass die Batteriepole 101, 102 durch eine zusätzliche Isolationsschicht 13 gegenüber Materiallagen bzw. Materialschichten 11, 12 des Zellgehäuses 110 isoliert sind.

Im dargestellten Ausführungsbeispiel wurde ein Biegewerkzeug in einem zweiten Abschnitt 22 des Dichtungsbereichs 20 angesetzt und eine dauerhafte Verformung durch Druckbeaufschlagung und Temperaturbeaufschlagung der Materiallagen 11, 12 im zweiten Abschnitt 22 des Dichtungsbereichs 20 durch das Biegewerkzeug realisiert.

Die Verformung ist im dargestellten Ausführungsbeispiel in Form eines Zickzackmusters bzw. einer gezackten S-Form umgesetzt. Dabei wurde beispielhaft ein Zickzackmuster mit drei Segmenten 31, 32 erzeugt, von welchen zwei erste Segmente 31 eine gleiche Länge und ein zweites Segment 32 eine Länge aufweist, die einer doppelten Länge eines ersten Segments 21 entspricht. Dieser Zusammenhang ist besonders vorteilhaft, da hierdurch quasi eine Wellenlänge hergestellt wird, um eine vorherige Ist-Länge des zweiten Abschnitts 22 auf eine Soll-Länge zu verkürzen und eine Ausbuchtung 200 des Dichtungsbereiches 20 über den Boden 111 hinaus zu korrigieren oder zumindest zu reduzieren.

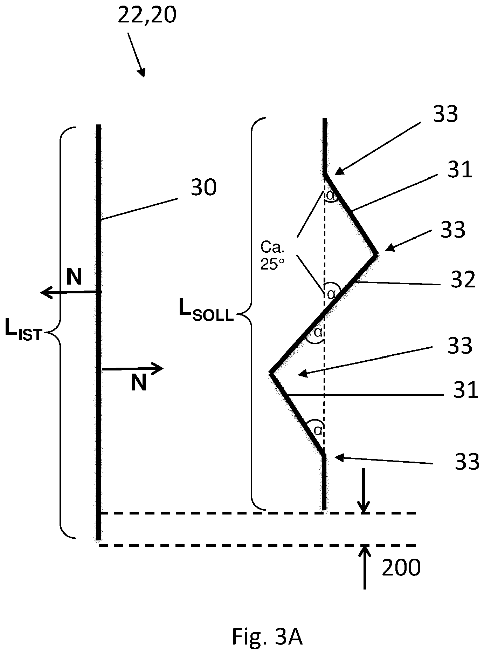

In der Fig. 3A ist schematisch ein Vergleich einer Ist-Länge L_{IST} des zweiten Abschnitts 22 mit der Ausbuchtung 200 bzw. den Bat-Ears mit einer korrigierten Länge des zweiten Abschnitts 22 des Dichtungsbereichs 20 illustriert, welcher aufgrund der Korrektur durch die plastische Verformung einer Soll-Länge L_{SOLL} entspricht. Die Fig. 3A veranschaulicht auch die plastische Verformung des zweiten Abschnitts 22 des Dichtungsbereichs 20 parallel zu oder zumindest in Richtung von Flächennormalen N.

Beispielhaft kann die Soll-Länge L_{SOLL} 14 mm entsprechen und die Ist-Länge L_{IST} des zweiten Abschnitts 22 15 mm betragen. Durch die eingebrachte plastische Verformung erfolgt beispielhaft eine Verkürzung um 1 mm und die Wiederherstellung der Maßhaltigkeit der Batteriezelle 100.

Die Verkürzung des zweiten Abschnitts 22 des Dichtungsbereichs 20 kann weiterhin eingestellt werden, wenn ein relativer Winkel α der Segmente 31, 32 des Zickzackmusters gegenüber einem Verlauf 30 des zweiten Abschnitts 22 vor der Verformung durch das Biegewerkzeug dazu eingesetzt wird. Beispielsweise kann der relative Winkel α vergrößert werden, um den zweiten Abschnitt 22 des Dichtungsbereichs 20 zu verkürzen. Im dargestellten Ausführungsbeispiel entspricht der relative Winkel α ~ 25°.

Je nach Ausgestaltung kann ein Biegewerkzeug mehrmals eingesetzt werden. Dabei kann nach jedem Ansetzen mit einer entsprechenden plastischen Verformung der Materiallagen 11, 12 im zweiten Abschnitt 22 Parameter, wie beispielsweise der relative Winkel α verändert werden, um die Ausbuchtung 200 zunehmend einzustellen. Bei einem derartigen schrittweisen Vorgehen können auch elastische Rückstellmomente des aufgeprägten Verformungsmusters aufgrund der plastischen Verformung im zweiten Abschnitt 22 berücksichtigt werden.

Vor dem Ansetzen des Biegewerkzeugs kann das Zellgehäuse 110 durch eine nicht dargestellte Fixierung im Bereich eines ersten Abschnitts 21 des Dichtungsbereichs 20 festgesetzt bzw. arretiert werden, um ein unbeabsichtigtes Verrutschen des Zellgehäuses 110 zu vermeiden. Je nach Ausgestaltung kann das Festsetzen des Zellgehäuses 110 oder der gesamten Batteriezelle 100 alternativ oder zusätzlich durch ein Einlegen in eine Halbschale oder eine nicht dargestellte Aufnahmemulde erfolgen.

Im dargestellten Ausführungsbeispiel erfolgt die Arretierung des Zellgehäuses 110 an einem ersten Abschnitt 21 des Dichtungsbereichs 20, welcher sich bereichsweise mit der Kontaktdurchführung 23 überlagert bzw. unmittelbar zu der Kontaktdurchführung 23 benachbart angeordnet ist. Die Batteriezelle 100 kann vorzugsweise auf beiden Seiten bzw. an beiden Batteriepolen 101, 102 bzw. entsprechend zu den Batteriepolen 101, 102 benachbart angeordneten ersten Abschnitten 21 arretiert werden.

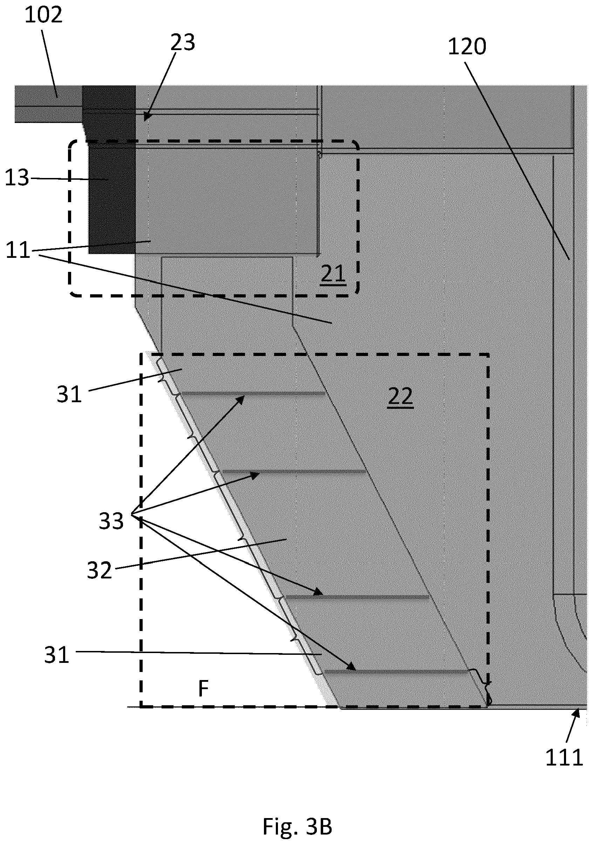

In der Fig. 3B ist die Position des ersten Abschnitts 21 und des zweiten Abschnitts 22 des Dichtungsbereichs 20 relativ zueinander veranschaulicht. Weiterhin sind Knicklinien bzw. Knickpunkte 33 des Verformungsmusters im zweiten Abschnitt 22 visualisiert, um den Schritt der plastischen Verformung zu verdeutlichen.

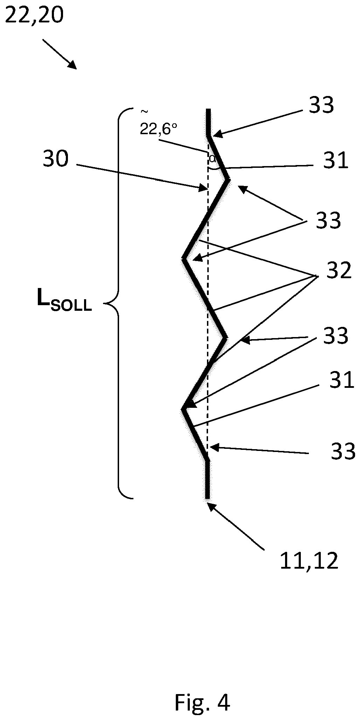

Die Fig. 4 zeigt eine weitere Schnittdarstellung von plastisch verformten Materiallagen 11, 12 im zweiten Abschnitt 22 des Dichtungsbereichs 20. Im Unterschied zum in Fig. 3A gezeigten Querschnitt, wird die plastische Verformung als zwei aneinander gereihte S-Formen ausgeführt, wodurch im zweiten Abschnitt 22 mehr Knickpunkte 33 und mehr Segmente 31, 32 erzeugt werden. Dabei kann der relative Winkel α beispielsweise in einem Bereich von 22° - 23° liegen.

Das resultierende Verformungsmuster besteht beispielhaft aus zwei ersten Segmenten 31 und drei zweiten Segmenten 32, welche im Wesentlichen als zwei Wellenlängen betrachtet werden können.

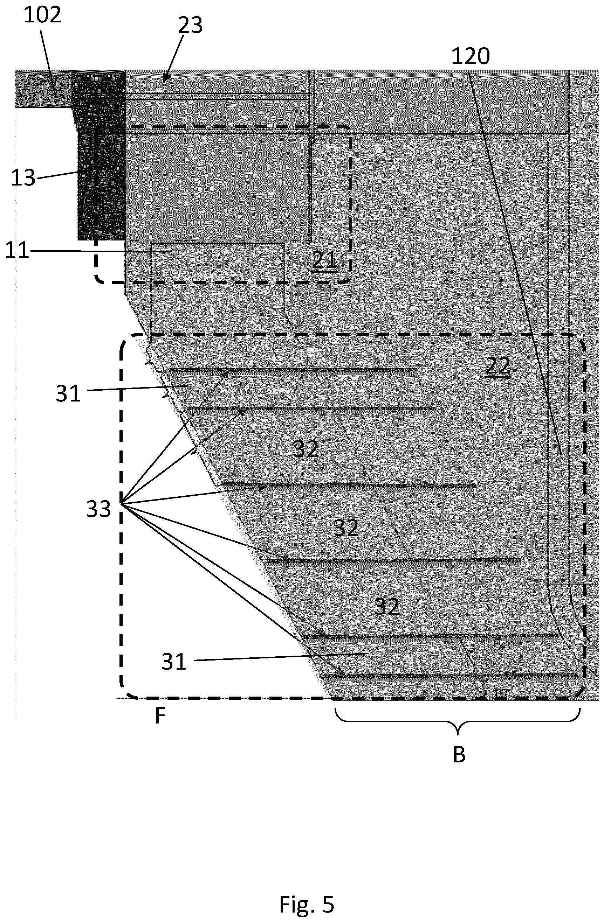

In der Fig. 5 ist eine Draufsicht auf einen Dichtungsbereich 20 zum Veranschaulichen eines Verfahrens gemäß einer weiteren Ausführungsform der Erfindung gezeigt. Im Unterschied zu den bereits beschriebenen Ausführungsbeispielen, wird hier eine plastische Verformung der Materiallagen 11, 12 im zweiten Abschnitt 22 des Dichtungsbereichs 20 derart umgesetzt, dass die jeweiligen Segmente 31, 32 sich über eine gesamte Breite des Dichtungsbereichs 20 bis zum Aufnahmeraum 120 erstrecken. Hierdurch kann die gesamte Breite B des Dichtungsbereichs 20 zum Korrigieren von Ausbuchtungen 200 bzw. Bat-Ears genutzt werden.

## Patentansprüche

1. Verfahren zum Erstellen oder Bearbeiten eines Dichtungsbereichs (20) eines Zellgehäuses (110) einer Batteriezelle (100), wobei der Dichtungsbereich (20) aus mindestens zwei übereinander angeordneten Materiallagen (11, 12) gebildet ist, welche einen Aufnahmeraum (120) des Zellgehäuses (110) zumindest bereichsweise begrenzen, wobei der Dichtungsbereich (20) und/oder das Zellgehäuse (110) festgesetzt wird, und wobei mindestens ein zweiter Abschnitt (22) des Dichtungsbereichs (20) durch ein Biegewerkzeug plastisch verformt wird, um eine Verkürzung einer Länge (L_{IST}) des zweiten Abschnitts (22) zu bewirken.

2. Verfahren nach Anspruch 1, wobei der mindestens eine zweite Abschnitt (22) des Dichtungsbereichs (20) parallel zu und/oder in Richtung mindestens einer Flächennormalen (N) des zweiten Abschnitts (22) plastisch verformt wird.

3. Verfahren nach Anspruch 1 oder 2, wobei durch das Biegewerkzeug die Materiallagen (11, 12) zumindest im zweiten Abschnitt (22) des Dichtungsbereichs (20) miteinander verbunden und plastisch verformt werden, um eine Verkürzung einer Länge (L_{IST}) des zweiten Abschnitts (22) zu bewirken; oder
wobei mindestens zwei miteinander verbundene Materiallagen (11, 12) im zumindest zweiten Abschnitt (22) des Dichtungsbereichs (20) durch das Biegewerkzeug plastisch verformt werden, um eine Verkürzung der Länge (L_{IST}) des zweiten Abschnitts (22) zu bewirken.

4. Verfahren nach einem der Ansprüche 1 bis 3, wobei der Dichtungsbereich (20) mindestens eine Kontaktdurchführung (23) aufweist, wobei mindestens ein erster Abschnitt (21) einseitig oder beidseitig der Kontaktdurchführung (23) angeordnet ist, und wobei der Dichtungsbereich (20) an einem der beiden ersten Abschnitte (21) oder an beiden ersten Abschnitten (21) durch mindestens eine Fixierung festgesetzt wird.

5. Verfahren nach einem der Ansprüche 1 bis 4, wobei durch das Biegewerkzeug in den mindestens einen zweiten Abschnitt (22) ein Wellenmuster eingeprägt wird, welches eine Amplitude in Richtung einer Flächennormalen (N) des zweiten Abschnitts (22) aufweist.

6. Verfahren nach Anspruch 5, wobei die Verkürzung des zweiten Abschnitts (22) durch eine Wellenlänge und/oder durch die Amplitude des Wellenmusters eingestellt wird.

7. Verfahren nach einem der Ansprüche 1 bis 6, wobei durch das Biegewerkzeug in den mindestens einen zweiten Abschnitt (22) des Dichtungsbereichs (20) ein Verformungsmuster in Form eines Zickzacks mit mehreren geraden und/oder gebogenen Segmenten (31, 32) eingeprägt wird, welches in Richtung mindestens einer Flächennormalen (N) des zweiten Abschnitts (22) ausgelenkt ist.

8. Verfahren nach Anspruch 7, wobei das Zickzackmuster mit gleichlangen oder unterschiedlich langen Segmenten (31, 32) in den mindestens einen zweiten Abschnitt (22) durch das Biegewerkzeug eingeprägt wird.

9. Verfahren nach Anspruch 7 oder 8, wobei ein relativer Winkel (α) der Segmente (31, 32) des als Zickzackmuster ausgestalteten Verformungsmusters gegenüber einem Verlauf (30) des zweiten Abschnitts (22) vor der Verformung durch das Biegewerkzeug dazu eingesetzt wird, um die Verkürzung des zweiten Abschnitts (22) einzustellen.

10. Verfahren nach einem der vorhergehenden Ansprüche, wobei das Biegewerkzeug dazu eingesetzt wird, mindestens einen kopfseitig und/oder bodenseitig angeordneten zweiten Abschnitt (22) des Dichtungsbereichs (20) zu verformen.

11. Verfahren nach einem der vorhergehenden Ansprüche, wobei die plastische Verformung des mindestens einen zweiten Abschnitts (22) vor einem Verschließen des Aufnahmeraums (120) oder nach einem Verschließen des Aufnahmeraums 120) durchgeführt wird.

12. Batteriezelle (100), aufweisend ein Zellgehäuse (110) mit mindestens einem Aufnahmeraum (120), in welchem Zellkomponenten angeordnet sind, wobei die Zellkomponenten durch mindestens einen Batteriepol (101, 102) elektrisch angeschlossen sind, welcher durch mindestens eine Kontaktdurchführung (23) aus dem Aufnahmeraum (120) hinausgeführt ist, wobei die Kontaktdurchführung (23) in mindestens einem Dichtungsbereich (20) des Zellgehäuses (110) vorgesehen ist, und wobei der mindestens eine Dichtungsbereich (20) zumindest bereichsweise durch mindestens eine Verformung in seiner Länge verkürzt ausgestaltet ist.
